# EUROPEAN PATENT APPLICATION

(11) **EP 1 530 189 A2**
(43) Date of publication of application: **11.05.2005**
(21) Application number: 04256743.8
(22) Date of filing: 02.11.2004
(51) Int. Cl.: G09F 27/00

(54) **Multiple product, multiple language package insert**

(30) Priority: 10.11.2003 US 705078
(71) Applicant: Microgenics Corporation, Fremont, CA 94538 (US)
(72) Inventor: Casal, David, San Mateo, CA 94403 (US); Hansen, Thomas J., Oakland, CA 94611 (US); Asuncion, Santiago, Elk Grove, CA 95758 (US)
(74) Representative: Hackett, Sean James

(57) **Abstract**

A method and device for providing informational package inserts (10a ... 16a) to a consumer. An electronic storage device (18) is included with each product of a plurality of related products where the electronic storage device includes informational package inserts regarding each of the products of the plurality of products. The package insert for each product is included in multiple language such that the single electronic storage device can be utilized with multiple products and in multiple countries.

## Description

### Background of the Invention

The present invention generally relates to product labeling, and more specifically to a system of electronic labeling, or e-labeling. In its preferred form, the present invention provides a single package insert having information for multiple products of a selected group of products where the product information for each product is written in a plurality of different languages on a packable, electronic storage device (e.g. a mini-compact disc) such that the common electronic storage device can be inserted into the packaging and shipped along with each product within the group of multiple products. The invention is particularly useful when used in connection with the sale and distribution of in vitro diagnostic devices or test kits used in professional laboratories or physcians' offices.

Presently, in many different fields, including in vitro diagnostics, product manufacturers print separate informational package inserts for each of the products that the manufacturer sells and distributes. Such inserts are sometimes referred to as package inserts and sometimes as product inserts. Regulators require that certain types of information be labeled on the device or the packaging for the device, but additional information is also normally required to be made available with product. This additional information is typically printed on a package insert. These package inserts may include operating instructions, component lists, ingredient lists or other relevant information regarding the product.

If the manufacturer is selling or distributing the products in multiple countries, it is typical that the package inserts be printed in the primary language of each country in which the product is being distributed. Thus, if a manufacturer is distributing a product in the United States and Europe, the manufacturer will prepare a printed package insert in five basic languages, including English, French, German, Italian and Spanish, for each product. Since the package inserts are printed in five different languages, each package insert can become bulky and expensive to print. Further, if the product information changes even slightly, the package insert must be reprinted and restocked. When the package insert is changed, a large number of inventoried package inserts may have to be destroyed, which increases the cost of the product to the consumer.

In some industries, such as the manufacture and sale of in vitro diagnostic devices and test kits, the burdens associated with providing up to date packaging inserts can be onerous. For example, a manufacturer of in vitro diagnostic assays may produce hundreds of different products, each of which must have its own informational package insert. Under current U.S. regulations for in vitro diagnostics, mandated product labeling (e.g., package inserts) must provide a lengthy list of information, such as details regarding the summary and explanation of the particular procedure, an intended use explanation, a precaution and warning section, as well as a large list of additional information as set forth in 21 CFR §809.10. In many cases, the cost of the package insert is a significant percentage of the price paid by the customer. The FDA is currently promoting the use of e-labelling, namely the use of compact discs or online access, in order to reduce the burdens associated with printing package inserts.

If a manufacturer desires to sell and promote the same products in the European community in addition to the U.S., European laws require that much of the same type of information be included along with the product package. However, since the member countries of the European community speak different languages, the package insert must provide the product information in the language of the country in which the product will be sold, or in an approved alternate language under certain circumstances. Thus, if a manufacturer desires to sell and distribute in vitro diagnostic devices throughout Europe, the package inserts are typically printed in at least the five major languages of English, French, German, Italian and Spanish, and possibly other languages as well.

Under current practices, as mentioned, each package insert is printed in a primary language (usually English) and multiple other languages such as those set forth above, and possibly others such as Japanese. The sheer volume of the information printed in each of the package inserts increases the cost of packaging for the products. Further, since each product has its own distinct package insert, the amount of package insert inventory required by the manufacturer, as well as the time associated with the insertion of the correct package inserts into the packaging for each of the products, increases the cost of in vitro diagnostic products considerably.

Therefore, it is an object of the present invention to reduce the costs associated with, and the effort required when, providing product information in the form of package inserts for regulated products such as in vitro diagnostic products.

### Summary of the Invention

The present invention relates to providing product labeling information on a packable, electronic data storage device, such as a mini-compact disc. In accordance with the invention, unique product labeling information is stored on the common packable data storage device in multiple languages for the multiple products. The product information is preferably stored in a location accessible by commercially available web browsers and computer operating programs so that the information can be accessed conveniently, and viewed or printed, simply by placing the electronic storage device in a personal computer. It is also desirable to include downloadable viewing software on the packable data storage device in case the personal computer does not contain compatible viewing software. The invention is particularly applicable to the sale of in vitro diagnostic devices and test kits which are used in professional laboratories and physicians' offices, but can be tailored for use in other industries in which manufacturers sell and distribute multiple products, each having specific or unique product information labeling requirements.

Initially, product labeling documentation in the same or substantially the same form as a printed package insert is created for each of the products. The product labeling documentation is typically authored in a first language (e.g., English) and then translated into one or more other languages. In the preferred embodiment of the invention, the product labeling is translated into four or more additional languages depending on the countries in which the respective product is intended to be sold and used. Thus, each product has product labeling documentation written in several different languages, which are electronically stored on a packable electronic data storage device, such as a mini-compact disc, in read-only format The electronic storage device thus includes the product labeling information for multiple different products in multiple languages.

A copy of the electronic storage device, e.g., a mini-compact disc, is packaged with each of the plurality of different products such that the user is provided with the product labeling information for the product being packaged. The use of the common electronic storage device of the present invention eliminates the need of the manufacturer and the user to store multiple printed package inserts. In addition, it is relatively easy to update product labeling information for any given product or class of products, and immediately begin distributing the updated information along with packaged products or otherwise.

Other features and aspects of the invention should be apparent to those skilled in the art upon reviewing the following drawings and description thereof.

### Brief Description of the Drawings

The drawings illustrate the best mode presently contemplated of carrying out the invention. In the drawings:

Fig. 1 is a schematic illustration of the storage of multiple product inserts, each written in multiple languages, on an electronic storage device for inclusion in a product package;

Fig. 2 is a schematic illustration of the organizational structure of an electronic storage device that includes multiple product inserts each written in multiple languages; and

Fig. 3 is a top view of a mini-compact disc containing product inserts for multiple products each in multiple languages in accordance with a preferred embodiment of the invention.

### Detailed Description of the Invention

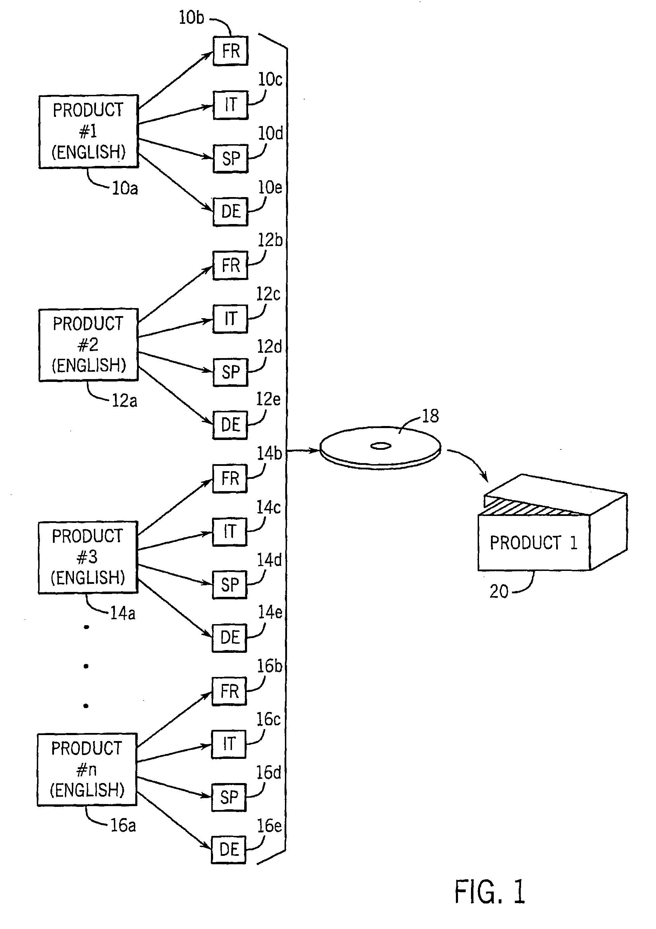

Fig. 1 illustrates a device and method for providing product information to a consumer. In many industries, manufacturers create multiple different products that may be generally related under a broad classification or category. Although the multiple products are somewhat related, each of the products typically includes its own specific properties and usage procedures. In this manner, each of the products are independent and are specifically tailored to a customer's need. An example of such industry is the manufacture and sale of in vitro diagnostic devices. Although the following description will be specifically tailored to the field of in vitro diagnostic devices, it should be understood that the method and apparatus of the present invention could be utilized in many other industries while operating within the scope of the present invention.

A manufacturer of in vitro diagnostic devices typically produces many different assays for testing for the presence of various different drugs and chemical agents. Each of the different diagnostic devices includes specific properties and handling instructions that must be understood by a consumer for proper use of the diagnostic device.

Presently, United States governmental regulations require that the labeling accompanying each in vitro diagnostic device must include a package insert that lists the proprietary name and established name of the product, the intended use of the product, a summary and explanation of the test, the chemical, physical or biological principles of the procedure and a listing of all of the reagents included in the test. The list of reagents must include a warning or precaution for the user, adequate instructions for mixing or diluting the reagents as well as appropriate storage instructions for the reagents. As the above indicates, each package insert must include a substantial amount of information. Presently, the governmental regulations require that the package insert must physically accompany each of the products, although this requirement may change.

Since many manufacturers produce products, such as in vitro diagnostic devices, for use in the United States and countries outside of the United States, package inserts are typically translated into one or more secondary languages other than English. As an example, if a diagnostic device is to be used in Europe, the package insert for each product is translated into at least five major languages, including English, French, Italian, Spanish and German. Many times, the package inserts are in the form of a multi-page booklet that is printed in the five different languages and the multi-language package insert is packaged along with the product in accordance with the governmental regulations.

Presently, the package inserts printed in the multiple languages are inventoried by the manufacturer for each of the products being manufactured and sold by the manufacturer. When an individual product is sold and is being prepared for shipment to the consumer, an assembler obtains the printed package inserts from inventory and folds the package insert into a size to be inserted into the product package. Once folded, the package insert is inserted into the package for shipment along with the product. Thus, the manufacturer must inventory numerous printed package inserts which are manually inserted along with the product for shipment.

Referring now to Fig. 1, thereshown are multiple package inserts typically created by a manufacturer. Specifically, Fig. 1 illustrates a primary package insert 10a for a first product, a primary package insert 12a for a second product, a primary package insert 14a for a third product and a primary package insert 16a for an nth product. In Fig. 1, it should be understood that a manufacturer could be utilizing a substantially larger number of products, however, only four such products 10-16 are shown. For example, it is contemplated that a manufacturer could have as many as 200 different products each having its own package insert.

As illustrated in Fig. 1, the primary package insert 10a for the first product is written in English. Although the English language will be described as being the primary language in the present description, it should be understood that the primary language could be any other language while operating within the scope of the present invention.

As illustrated in Fig. 1, the first package insert 10a is written in English and is translated into one or more different, secondary languages to create the secondary, translated package inserts 10b-10e. The secondary package inserts 10b-10e can be translated into any desired additional language. In the embodiment illustrated in Fig. 1, the secondary, translated package inserts 10b-10e are written in French, Italian, Spanish and German. Thus, the package insert for the first product is written in five different languages, which are typically the five major languages used in the European Community.

As illustrated in Fig. 1, the primary package insert 12a for the second product, the primary package insert 14a for the third product, and the primary package insert 16a for the nth product are also translated into four additional languages to create the secondary, translated package inserts. Specifically, the primary package insert 12a is translated into French (12b), Italian (12c), Spanish (12d) and German (12e). Likewise, the third package insert 14a is translated in to French (14b), Italian (14c), Spanish (14d) and German (14e). This pattern continues for all of the products up to and including the primary package insert 16a for product n. This package insert is also translated into French (16b), Italian (16c), Spanish (16d) and German (16e).

As can be understood in Fig. 1, the package inserts for each of the individual products, when translated into five languages, create a large volume of information that must be first printed and subsequently inventoried by the product manufacturer. When utilizing printed package inserts, the manufacturer would include the printed package inserts in each language when shipping a specific product. For example, if the manufacturer is shipping product #2, the manufacturer includes the printed version of the primary package insert 12a as well as the translated, secondary package inserts 12b-12e. Typically, all of the related inserts are printed as a single document that is then inventoried for each product. To include the correct inserts with a product, personnel at the manufacturer must first pull the insert from an inventory of printed documents and insert the printed documents into the physical packaging for the product. This step increases the cost and time required to package a product.

As can be understood by the above description, if the package insert changes for any one of the products, the previously printed package inserts must be discarded and new inserts are revised and reprinted including the new information. This step results in a large number of pre-printed package inserts being wasted as well as slowing down the shipping of product.

In the field of the manufacture and sale of in vitro diagnostic devices, each of the package inserts is a dynamic document that frequently changes. Thus, the pre-printed package inserts must be reprinted frequently, which increases the cost of the product.

Referring back to Fig. 1, in accordance with the present invention, each of the package inserts, including the primary package insert and the multiple secondary, translated inserts are converted into an electronic form and saved on an electronic storage device 18. In the embodiment of the invention illustrated in Fig. 1, the electronic storage device 18 is a mini-compact disc having a diameter of 3.25 inches. However, it should be understood that the electronic storage device 18 could have many other forms, such as a compact disc, a DVD, a memory stick, floppy disk, or any other type of currently known or yet to be developed electronic storage medium that is both low in cost and relatively small in size.

In the embodiment of the invention illustrated in Fig. 1, each of the package inserts is initially configured into an electronic file format that can be easily stored and accessed from the electronic storage device 18. In accordance with the preferred embodiment of the invention, the primary package inserts are stored as separate documents from the secondary, translated package inserts. Likewise, each of the secondary, translated package inserts are also stored electronically as separate documents. Thus, the package inserts are electronically stored as separate files for each of the five languages and the electronic storage device 18 includes five separate, individual files for the package inserts for each of the products. However, it is also contemplated that the package inserts could be combined into a single document for each product where the single document would include the package insert in each of the multiple languages. However, the storage of separate files for each language is contemplated as being the preferred embodiment of the invention.

In the preferred embodiment of the invention, each of the package inserts in each language is converted into an image file that is created as a read-only file. An example of such an image file is a .pdf or .jpg file format. Both the .pdf and .jpg file formats are conventional image files that can be read using currently available computer software. Both of these file formats present an image that can be viewed and printed without allowing the user to alter the information contained in the stored file.

The electronic storage device 18, such as a mini compact disc, includes all of the package inserts for a large number of related products. The package inserts are included in not only the primary language (English), but are also included in multiple secondary languages (French, Italian, Spanish and German). Thus, the single electronic storage device 18 includes the package inserts for multiple products where each of the individual package inserts is included in multiple languages. Thus, the single electronic storage device 18 is capable of providing a customer with the desired package inserts for a large number of individual products each in multiple languages.

Upon receiving the electronic storage device 18, the user simply accesses the files included on the electronic storage device 18 by using a personal computer system. In the preferred embodiment of the invention, the electronic storage device 18 also includes viewing software stored on the electronic storage device 18 such that the user can download the viewing software from the electronic storage device 18 without requiring software to be present on the customer's computer.

Referring back to Fig. 1, the electronic storage device 18 is inserted into the packaging 20 along with the product. In the embodiment of the invention illustrated in Fig. 1, the packaging 20 is for product #1. However, as can be understood in Fig. 1, the single electronic storage device 18 could also be inserted into the packaging for any of the manufacturer's products, since the electronic storage device 18 includes all of the package inserts for the manufacturer's product line, each in multiple languages. Thus, the manufacturer only needs to inventory a supply of the common electronic storage devices 18, since each of the electronic storage devices 18 includes all of the package inserts for the manufacturer's related product line.

In the preferred embodiment of the invention, the electronic storage device 18 is a mini-compact disc. The use of a mini-compact disc provides the advantage that the electronic storage device 18 is relatively small in size. For example, typical mini-compact discs have a diameter of approximately 3.25 inches. In the field of in vitro diagnostic devices, the product packaging 20 is oftentimes only slightly larger than the size of the mini-compact disc. Therefore, if an electronic storage device, such as a conventional compact disc, is used in place of the mini-compact disc, the manufacturer may need to increase the packaging size to accommodate the electronic storage device. It can be understood that if the product packaging is sufficiently large, the use of a conventional compact disc, rather than a mini-compact disc, would not result in the requirement of increased packaging size. Although other types of electronic storage devices are contemplated as being within the scope of the present invention, the mini-compact disc is currently the most preferred type of electronic storage device due to its size and storage capacity.

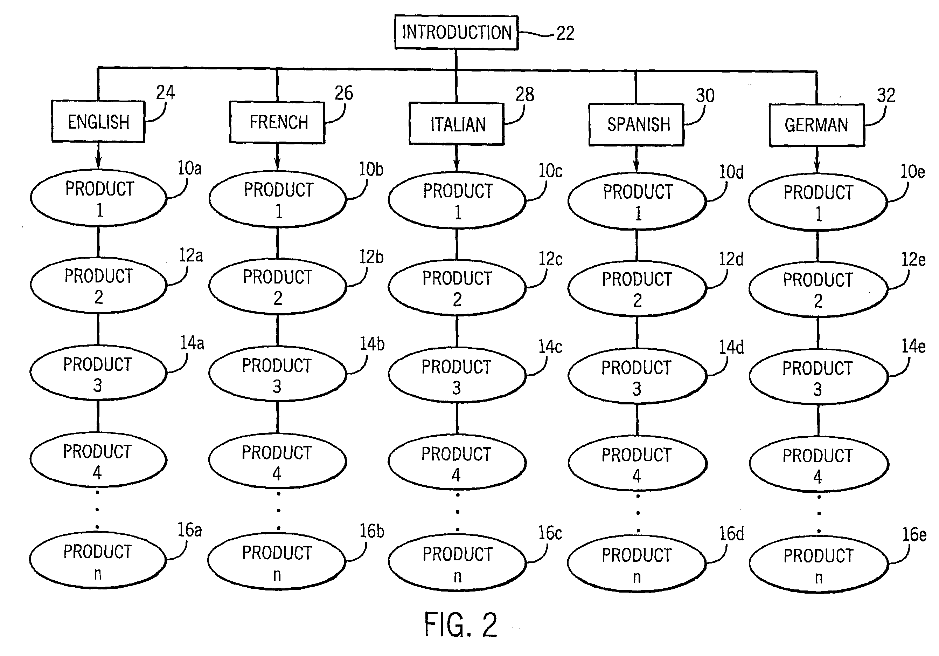

Referring now to Fig. 2, thereshown is a graphic illustration of the software interface included on the electronic storage device 18. The graphic interface allows the user to access the package inserts included on the electronic storage device and selectively view or print the package insert in which the user is particularly interested.

Initially, the customer is presented with an introduction screen, as illustrated by block 22. Typically, the introduction screen welcomes the customer and provides basic information concerning the manufacturer, as well as simple instructions to the user for navigating through the electronic files stored on the electronic storage device. The introduction also allows the customer to download and install the viewing software contained on the electronic storage device 18. An example of possible viewing software is Adobe Acrobat Reader®.

In the preferred embodiment of the invention, the introduction screen is a web-based index page that can be viewed by the customer using commercially available web browsers, such as Internet Explorer® or Netscape Navigator®. The use of a web-based index page dramatically increases the likelihood that the customer will have the required software to view the contents contained on the electronic storage device. However, it is contemplated by the inventors that other types of index pages could be utilized while operating within the scope of the present invention.

After completing the introduction 22 and possibly downloading the viewing software, the user is presented with multiple language choices, as illustrated by selection blocks 24-32. In the embodiment of the invention illustrated in Fig. 2, the selection blocks 24-32 allow the user to select between English, French, German, Italian and Spanish documents. Additional languages are also contemplated as being within the scope of the present invention. In the preferred embodiment of the invention, the language selections are graphically represented by the flag for each of the countries represented. This type of graphical presentation aids in consumer understanding.

Once the user has selected the desired language, a list of individual product inserts for the multiple products are presented in a standard list. As illustrated, the number of individual products beneath each of the language selections 24-32 is the same such that each product has a package insert written in each of the multiple languages.

Once the user has selected the individual product that he or she is interested in receiving and reviewing, the user simply makes the appropriate selection and the electronic version of the package insert is displayed in only the selected language. As discussed previously, each of the package inserts is stored in a read-only format such that the user can only view the package insert and cannot alter the subject matter of the package insert.

As illustrated in Fig. 2, the electronic storage device can include a large number of individual package inserts for the numerous products and multiple languges. It is contemplated that the electronic storage device may contain around 200 products with the package insert for each being written in five languages, thus resulting in 1000 individual documents. Because of the large number of documents, it is contemplated that a search function could be incorportated onto the electronic storage device 18. The search function would allow the consumer to enter a term, such as the target drug for each of the in vitro diagnostic devices, and the search would return all of the documents including the search term. Thus, the consumer would be able to bypass the long list of products beneath each language heading and would be directed immediately to the product of interest.

It is contemplated by the inventors that the search function could be accessible by the consumer either before or after the consumer has selected the appropriate language. In either case, the consumer is able enter a search term and more quickly access only the product inserts that include the search term. The search funtion would typically carried out using a conventional search engine for searching stored information as is well known to those of ordinary skill in the art.

As the above description indicates, the electronic storage device 18 of the present invention includes the package inserts for multiple products of a related product line. In the field of in vitro diagnostic devices, the electronic storage device includes the package inserts for multiple assay tests, each of which are either for different types of chemical agents or are implemented using specific types of testing procedures. Each of the diagnostic devices includes product inserts that include specific information dictated by federal regulations and must be included with the actual product packaging.

In addition to providing information relating to the individual products, it is contemplated that the electronic storage device can also be configured to include other types of information that may be relevant to the customer for the individual product. For example, it is contemplated that MSDS data sheets for each of the products can be included on the electronic storage device such that the MSDS data sheets can be accessed by the consumer. Further, in the field of in vitro diagnostic devices, it is contemplated that calibration and control specifications for each of the different test kits could also be included on the electronic storage device.

In addition to having package inserts for the multiple products of the manufacturer, the electronic storage device 18 also includes the package inserts translated into multiple different languages. Thus, the electronic storage device not only includes the package insert for multiple products, but also includes multiple languages for each of the individual package inserts. It is contemplated by the inventors that the electronic storage device 18 could include hundreds of individual package inserts stored in an electronic format that allows the user to read the information only and prevents alteration of the product inserts.

As described previously, in the preferred embodiment of the invention, the package inserts are stored as separate documents for each of the multiple different languages. Thus, if the user selects one of the package inserts under the French heading 26 in Fig. 2, the user is visually presented with only the French version of the package insert. Thus, the user does not need to page or flip through information written in other languages that may or may not be understandable by the user. Thus, the user is able to more directly access the information required without having to selectively filter out unnecessary and undesired information.

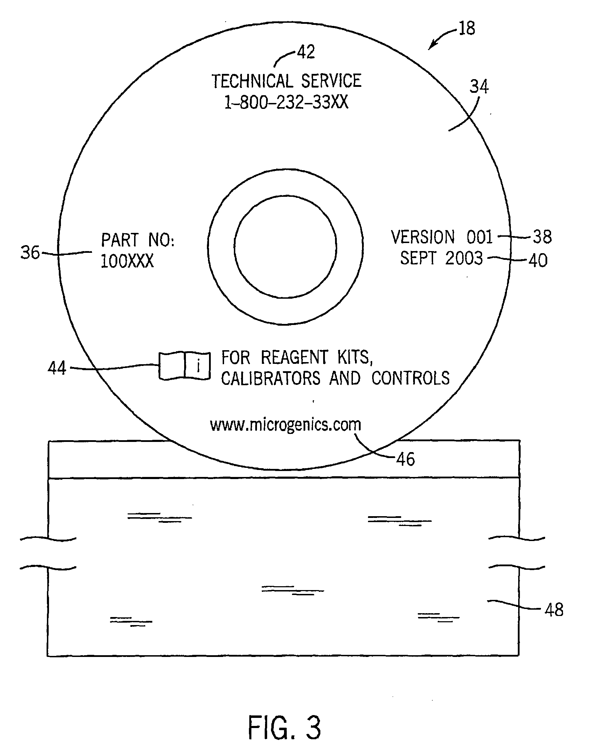

Referring now to Fig. 3, thereshown is a preferred embodiment of the electronic storage device 18 of the present invention. In Fig. 3, the electronic storage device 18 is a mini-compact disc. As illustrated, the mini-compact disc has a front face surface 34 that is imprinted with various important information. Specifically, the front face surface 34 includes a part number 36 for the electronic storage device. The part number allows the manufacturer of the product to inventory a supply of electronic storage devices 18.

The front face surface 34 further includes a version number 38 and version date 40 that allow both the manufacturer and the user to track the version and creation date of the electronic storage device 18. The front face surface 34 also includes a contact phone number 42 that allows a customer to contact the manufacturer if assistance is required.

Under current proposed federal standards, a customer must be able to contact the manufacturer and request a printed version of the electronically available package inserts if the customer desires such information. The technical service telephone number 42 allows the customer to make such contact.

The electronic storage device 18 further includes an informational icon 44 that instructs the consumer to consult an instruction sheet prior to use of the product. The icon 44 is an international standard.

The face surface 34 includes a web address 46 that allows the user to access the same package inserts available on the electronic storage device 18 from an online web site. The online web site will include up to date package inserts and allow the customer to access additional information relating to the product if desired. Although the provision of the package inserts online for access by a consumer is a contemplated alternative to the electronic storage device 18, current regulations in both Europe and the United States requires the package inserts to be shipped and supplied along with the products.

Referring back to Fig. 3, the electronic storage device 18 is stored in a sleeve 48 to provide protection to the electronic storage device 18. In the preferred embodiment of the invention, the sleeve 48 is a sheet of plastic material that protects the mini-compact disc shown in Fig. 3.

Once the mini-compact disc is created and received within the sleeve 48, the sleeve and mini-compact disc can be placed into the packaging for a product. It is contemplated by the inventors that the electronic storage device can be placed anywhere within the product packaging. However, in many applications it is desired to place the electronic storage device along side the packaged products to both protect the electronic storage device and provide easy access once the product packaging is opened.

As can be understood by the foregoing description, utilization of an electronic storage device as compared to printed package inserts allows the manufacturer to revise each of the individual package inserts and simply transfer the electronic files onto the electronic storage device 18. Thus, the manufacture can more easily and cheaply update package inserts as compared to the printing and storage of paper package inserts.

Various alternatives and embodiments are contemplated as being within the scope of the following claims particularly pointing out and distinctly claiming the subject matter regarded as the invention.

## Claims

1. A method of providing informational package inserts to a customer for each individual product of a plurality of related products, the method comprising the steps of:
creating a primary package insert in a primary language for each of the products of the plurality of related products;
creating at least one translated package insert for each of the primary package inserts, each of the translated package inserts being written in one of a plurality of secondary languages;
storing the primary package inserts and the translated package inserts for each of the plurality of related products on an electronic storage device; and
providing the electronic storage device to the customer along with each product of the plurality of related products.

2. The method of claim 1 wherein the same electronic storage device is packaged along with each product of the plurality of related products.

3. The method of claim 1 wherein each of the package inserts includes governmental-mandated information regarding each of the plurality of related products.

4. The method of claim 1 wherein the package inserts are stored on the electronic storage device in a read-only format.

5. The method of claim 4 wherein the electronic storage device is a mini-compact disc.

6. The method of claim 1 wherein each of the package inserts are written in at least English, German, French, Italian and Spanish.

7. The method of claim 1 further comprising the step of providing a web-based index page on the electronic storage device such that the index page can be viewed using a web browser.

8. The method of claim 1 wherein each of the primary package inserts is translated into a plurality of translated inserts, each of the translated inserts for each primary package inserts being written in a different language.

9. The method of claim 1 wherein the related products are in vitro diagnostic devices.

10. The method of claim 9 wherein each of the package inserts includes governmental -mandated information regarding each of the plurality of related products.

11. An informational package comprising an electronic storage device having stored thereon information relating to each of a plurality of related consumer products in a primary language and additionally information relating to each of said related products in one or more secondary languages, whereby said information relating to one of said plurality of products may be accessed from said informational package in any one or more of said primary and secondary languages.

12. An informational package according to claim 11, wherein the electronic storage device is a mini-compact disc in a read only format.

13. A consumer product having packaged therewith an informational package according to claim 11 or claim 12.

14. A batch of related consumer products each being accompanied by an informational package according to claim 11 or claim 12, wherein the informational packages are identical to one another.

15. An informational package according to claim 11 wherein the informational package includes governmental-mandated information regarding each of the plurality of related consumer products.
